# EUROPEAN PATENT SPECIFICATION

(11) **EP 0 721 295 B1**
(45) Date of publication and mention of the grant of the patent: **09.05.2001**
(21) Application number: 94905909.1
(22) Date of filing: 20.09.1993
(51) Int. Cl.: A01G 1/08

(54) **LAWN AND FLOWER BED EDGING KIT**
KIT FÜR RASEN UND BLUMENBEET
KIT POUR BORDURES DE PELOUSES ET DE PARTERRES DE FLEURS

(43) Date of publication of application: 17.07.1996
(73) Proprietor: Goldman, Robert I., San Diego, CA 92120 (US)
(72) Inventor: Goldman, Robert I., San Diego, CA 92120 (US)
(74) Representative: Riebling, Peter, Dr.-Ing.
(86) International application number: US9308871
(87) International publication number: WO9508257

(56) References cited:
- US-A- 3 572 224
- US-A- 4 869 018
- US-A- 5 317 833
- US-S- D 182 124

## Description

### SPECIFICATION

### Field of the Invention

This invention relates to building blocks, and more specifically to substitutes for masonry blocks used in forming edging for flower beds, lawns and the like.

### Background of the Invention

In the landscaping arts, it is customary to delineate flower beds, lawns and pathways with masonry edgings made from a series of bricks, masonry blocks or a combination of edging elements cast out of cement. The installation of those types of edgings requires considerable time and a variety of building elements, as well as some masonry skill.

There is a need for a more efficient medium for creating effective and esthetically pleasant borders between flower beds, lawns and garden paths.

The document US-A-4 869 018 discloses a system for forming an above ground bed comprising a plurality of elongate modular members or blocks arranged to be readily connected to one another to form a walled enclosure disposed on the ground. Each of the members is an elongate hollow body having a pair of ends. At each end is a releasable connector portion which is arranged to releasably connect the members to one another at various angles to form enclosure of various shapes. Disposed on opposite ends each member comprises an upper connecting member and a lower connecting member, respectively, formed of a hollow cylindrical-shaped portion for effecting the releasable securement of the elongate members. Each of the two connecting members is half of the height of the elongate members. For effecting the interconnection the upper connecting member of one elongate member has to be positioned vertically above the lower connecting member of an immediately adjacent elongate member, and the connecting members are hold together by means of a cylindrical coupling which is vertically received within openings in the upper and lower connecting member, respectively.

### Summary of the Invention

The principal and secondary objects of this invention are to provide a simple, basic building element which can be used to quickly and conveniently form borders around flower beds, lawns and along garden pathways without the use of special tools or any masonry skill.

These and other objects are achieved by providing building blocks according to claim 1.

These blocks or brick elements are made of molded plastic which can be hingedly interconnected with a series of similar blocks to form sinuous sections of edging which closely resemble those made from additional bricks. Each block element has a pair of anchoring prongs that facilitates its positioning and retention into and over any penetrable surface.

### Brief Description of the Drawing

Figure 1 is a perspective view of a series of blocks forming a lawn edging;
Figure 2 is a perspective view of a joint washer;
Figure 3 is a top plan view of a block;
Figure 4 is a bottom plan view thereof;
Figure 5 is an elevational front view thereof;
Figure 6 is a left side elevational view thereof;
**Figure 7** is a right side elevational view thereof;
**Figure 8** is a cross-sectional view of a block equipped with internal lighting;
**Figure 9** is a cross-sectional view of an alternate embodiment of a block;
**Figure 10** is an end-view thereof;
**Figure 11** is a cross-sectional view of an interlocking member;
**Figure 12** is an end-view thereof; and
**Figure 13** is a perspective view of a end plug.

### Description of the Preferred Embodiments of the Invention

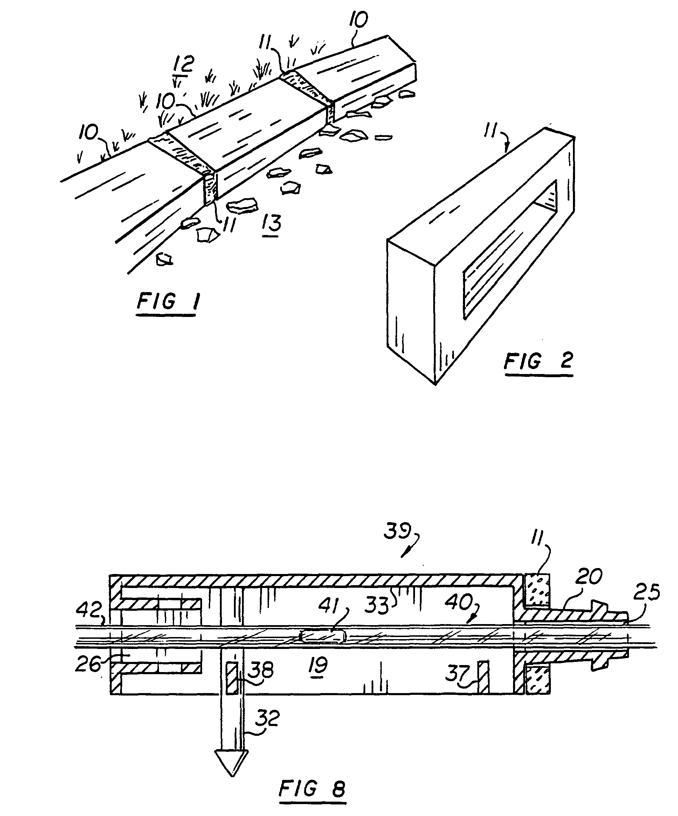

Referring now to the drawing, there is shown in Figure 1 a section of a series of blocks 10 separated by joint-washers 11 according to the invention, forming an edging between a lawn area 12 and a garden path area 13.

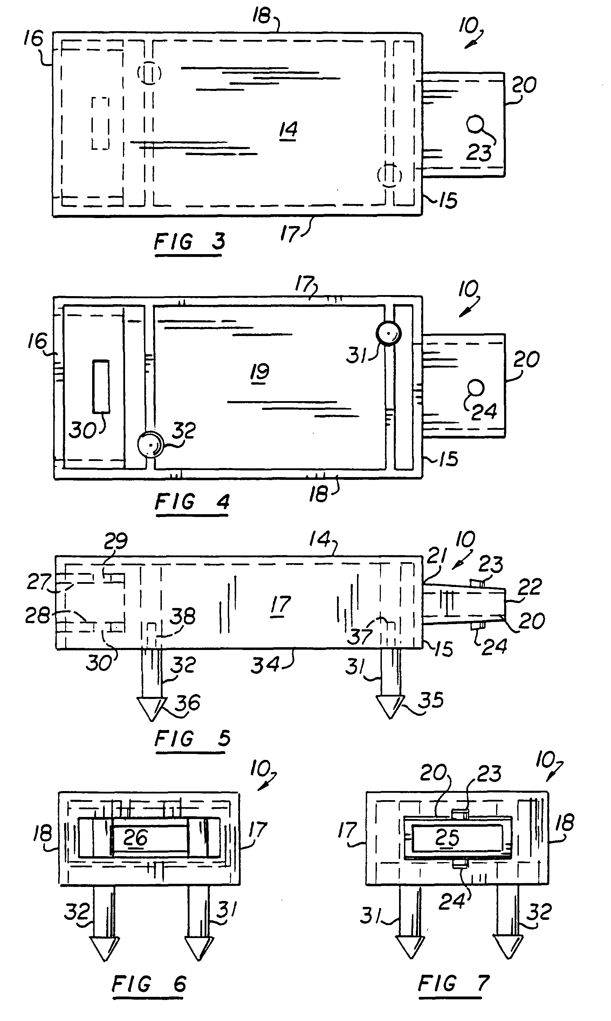

Each block 10 is made of molded plastic as illustrated in Figures 3-7. Each block essentially consists of a rectangular polyhedron having the general dimensions and color of a standard construction brick approximately 20.4 centimeters (7 inches) long, 8.8 centimeters (3 1/2 inches) wide, and 5.7 centimeters (2 1/4 inches) high; or of a closely similar oblong construction block. For esthetical reasons, each block may be colored to preferably resemble a new or used brick. Each block 10 comprises a roof 14, a pair of parallel end-walls 15, 16, and a pair of side-walls 17, 18. The end-walls and the side-walls extend orthogonally and downward from the periphery of the roof 14 to define an interior chamber 19 having an open bottom.

A substantially rectangular interconnecting element 20 extends orthogonally and outwardly from the center of the right end-wall 15. The interconnecting element 20 has a vertical cross-section which tapers down slightly from its root 21 on the face of the right side-wall to its distal end 22. A pair of aligned pins or nibs 23, 24 project upwardly and downwardly from the upper and lower surfaces of the interconnecting element. The center of the interconnecting element forms a hollow channel 25 in communication with the block internal chamber 19.

The left end-wall 16 has a rectangular cavity 26 which is shaped, positioned and dimensioned to engage over the interconnecting element 25 of an adjacent block. The height of the cavity 26 is substantially equivalent to the height of the interconnecting element 20 near its root 21. The width of the cavity 26 is slightly larger than the overall width of the interconnecting element 20. The internal upper surface 27 and lower surface 28 of the cavity 26 have aligned oblong windows 29 and 30 respectively which are sized and positioned to engage nibs 23, 24 of the adjacent block interconnecting element 20. Due to the rotational connection between the nibs 23, 24 and the windows 29, 30 respectively, the width of the windows 29 and 30 corresponding to approximately one-third of the total width of the block 10, and the fact that the width of the cavity is larger than the width of the interconnecting element, two adjacent blocks can be connected in a hinged manner allowing horizontal arcuate movement of one block in relation to the other in order to create curved edging sections as illustrated in Figure 1.

Rectangular washers 11 made of compressible material such as natural or synthetic rubber, natural or synthetic foam and elastomers are slipped over the interconnecting element 20 of each block to serve as a buffer, and simulate cement joints between the blocks 10.

Two prongs 31, 32 extend downwardly from the undersurface 33 of the roof beyond the lower edge 34 of the block. Each prong has a pointed and barbed distal section 35, 36. The prongs are used to anchor each block to the underlying supporting surface. That supporting surface may be a natural one such as turf or solid, some prepared aggregate or cementitious medium. Prongs 31, 32 are stabilized by two cross-bars 37, 38 spanning the two side-walls 17, 18 near the lower edge 34 of the box and the midsections of the prongs.

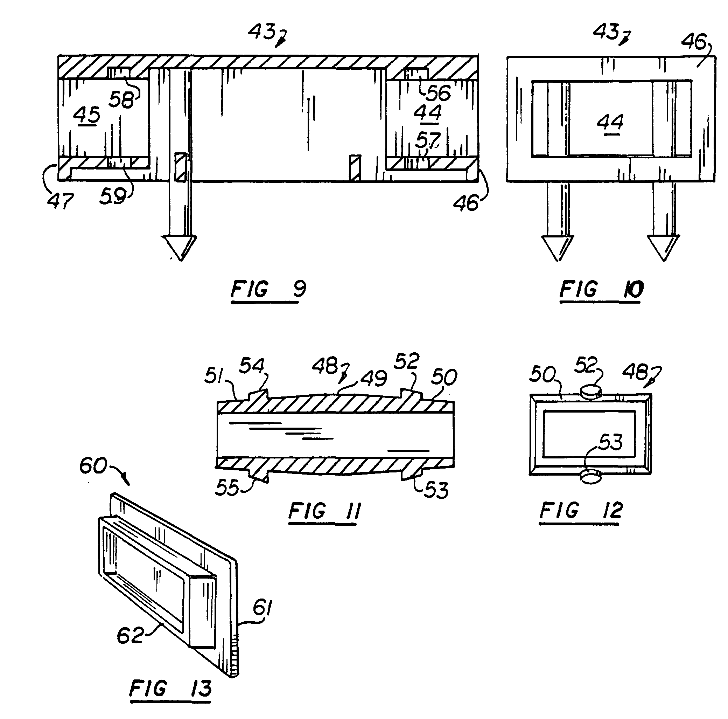

Figure 8 illustrates a block 39 which is traversed by a section of illuminating strip 40 of the type having bulbs 41 at regular intervals enclosed along with the wiring in a transparent tubing 42. The block 39 is preferably made of a transparent material, and a whole series of them can be strung like beads over the illuminating strip, passing through the channel 25 of the interconnecting element, internal chamber 19, and the cavity 26.

The alternate embodiment 43 of the block illustrated in Figures 9-13 is characterized by two symmetrical cavities 44, 45 in opposite end walls 46, 47. These cavities are substantially similar to the rectangular cavity 26 in the left wall of the first-described embodiment. A separate interlocking member 48 is used to hingedly join two of such blocks. The interlocking member 48 has a quadrangular central portion 49 and a pair of symmetrical, tapered projections 50, 51 extending in opposite axial directions from said central portion. Each of said projections is substantially similar to the interconnecting element 20 of the earlier-described embodiment. The vertically aligned pairs of nibs or stubs 52, 53 and 54, 55 that extends from the top and bottom surfaces of each projection are shaped, dimensioned and positioned to snap into the corresponding pairs of recesses 56, 57 and 58, 59 respectively of two adjacent blocks. The insertion of the projections 50, 51 into the cavities 44, 45 is facilitated by the outwardly tapering of the projections. It should be noted that the projections 50, 51 have a height substantially commensurate with the height of the cavities 44, 45, but a smaller width in order to allow limited rotation of the interconnecting element within the cavities about the vertical axes of the ribs and recesses.

An equivalent mode of attachment can be achieved by providing cavities or recesses in the projections of the interlocking member and placing the mating nibs or stubs inside the block.

An end cap 60 is provided to close the end wall of a last one of a series of interlocked blocks. The end cap has a cover 61 commensurate with the outer dimensions of the end walls 46, 47 and a plug 62 shaped and dimensioned to be forcedly engaged into the opening of either one of the cavities 44, 45.

While the preferred embodiments of the invention have been described, modifications can be made and other embodiments may be devised without departing from the scope of the invention as defined by the appended claims.

## Claims

1. A block (10) for use in combination with other symmetrical blocks in building edgings for flower beds, lawns and garden paths, which comprises:
a rectangular top (14) having substantially planar upper and lower surfaces;
first and second end-walls (15,16), each end-wall having an inner face and an outer face;
a pair of side-walls (17,18);
said end-walls and side-walls extending downwardly and peripherally from said top to define an internal chamber (19), characterized by:
an interlocking member (20) projecting orthogonally and outwardly from the center of the outer face of the first end-wall (15);
the second end-wall having a centrally located first cavity (26) extending orthogonally into the internal chamber (19), shaped and positioned to engage over a second of said interlocking members (20) associated with a second of said blocks; and
means for hingedly securing said second interlocking member within said cavity, said means for securing being oriented and positioned, and said cavity being sized to allow limited lateral, arcuate movement of said second interlocking member within said first cavity allowing a movement of a said block (10) with respect to a second of said blocks coupled together by means of said second interlocking member.

2. The block of claim 1 which further comprises a rectangular slab (11) of resilient, compressible material, said slab being commensurate with said end-wall and having a central channel sized and positioned to engage over said second interlocking member and form a compressible filler between two of said blocks.

3. The block of Claim 2, wherein said resilient material is selected from a group consisting of synthetic foams, natural foams, natural rubber and elastomers.

4. The block of Claim 2, which further comprises at least one anchoring prong (31,32) extending downwardly beyond lower edges of said end-walls (15,16) and side-walls (17,18) into an underlying material supporting said block.

5. The block of Claim 4, wherein said prong (31,32) comprises a barbed distal section (35,36).

6. The block of Claim 5, wherein said prong (31,32) extends from the lower surface of said top (14).

7. The block of claim 1, wherein said means for hingedly securing comprises interlocking elements in form of nibs (23,24) aligned about vertical axes and projecting upwardly and downwardly from the upper and lower surfaces of the interlocking member (20).

8. The block of Claim 4, wherein said top (14), end-walls (15,16), side-walls (17,18), prong (31,32), and interlocking members (20) are integrally molded out of plastic.

9. The block of claim 8, wherein said interlocking member (20) is integral with the outer surface of the first end-wall (15).

10. The block according to claim 7, wherein said cavity (26) has recesses (29, 30) shaped, dimensioned and positioned to releasably nest one of the nibs (23,24).

11. The block of claim 1, wherein said first end-wall (46) has a second cavity (44) symmetrical to said first cavity (45); and
said interlocking member (48) is separable from said block (43) and comprises a central portion (49) and a pair of symmetrical projections (50,51) extending in opposite axial directions from said central portion (49).

12. The block of claim 11, wherein said interlocking member (48) further comprise:
a pair of vertical aligned nibs (52-55) projecting vertically from each of said symmetrical projections (50,51), and
each of said first and second cavities (44,45) having recesses (56-59) shaped, dimensioned and positioned to releasably nest one of said nibs (52-55).

13. The block of claim 11, wherein each of said symmetrical projections (50,51) and each of said cavities (44,45) have a substantially quadrangular cross-section and substantially commensurate heights; and
each of said projections (50,51) has a width substantially shorter than the width of said cavities (44,45) to allow limited rotational movement of one of said interlocking members (48) within one of said cavities about one of said vertical axes when a nib (52-55) associated with said projection is nested within a recess associated with said cavity.

14. The block of Claim 13, wherein first and second projections (50, 51) extend in opposite axial directions, said cavities (44,45) are symmetric with each other and said projections of said interlocking member are symmetric with each other.

15. The block of Claim 14, wherein said interlocking member (48) has tapered ends (50,51) to facilitate penetration of an end of said interlocking member into a cavity in said block.

16. The block of Claim 10, which further comprises an end cap (60) which comprises:
a cover (61) having substantially planar inner and outer surfaces substantially parallel to one another, said outer surface sized and dimensioned to be commensurate with the outer dimensions of said first end-wall (15); and
a plug (62) sized and dimensioned to tightly engage said first cavity (44), said plug projecting from said inner surface of said cover (61).

## Patentansprüche

1. Ein Block (10) für die Verwendung in Kombination mit anderen, symmetrischen Blöcken zum Bau von Begrenzungen für Blumenbeete, Rasenflächen und Gartenwegen, welcher umfaßt:
eine rechteckige Oberseite (14) mit im wesentlichen planaren oberen und unteren Flächen;
eine erste und eine zweite Endwand (15, 16), wobei jede Endwand eine innere und eine äußere Seite aufweist;
ein Paar von Seitenwänden (17, 18);
wobei die Endwände und die Seitenwände sich nach unten und angrenzend an die besagte Oberseite erstrecken und eine innere Kammer (19) definieren,
**gekennzeichnet durch:**
ein Verriegelungsteil (20), welches sich rechtwinkling und auswärts aus dem Zentrum der Außenseite der ersten Endwand (15) erstreckt;
die zweite Endwand, welche einen zentral angeordneten ersten Hohlraum (26) aufweist, der sich rechtwinklig in die innere Kammer (19) hineinerstreckt und derart ausgebildet und positioniert ist, um ein zweites dieser Verriegelungsteile (20) eines zweiten der besagten Blöcke aufzunehmen; und
Mittel zur gelenkigen Befestigung des zweiten Verriegelungsteils innerhalb des Hohlraumes, wobei das Mittel zum Befestigen derart ausgerichtet und positioniert ist und der Hohlraum derart bemessen ist, um eine begrenzte, seitliche bogenförmige Bewegung des zweiten Verriegelungsteils innerhalb des ersten Hohlraums zu erlauben sowie eine Bewegung des Blocks (10) gegenüber einem zweiten der besagten Blöcke, welche durch besagtes zweites Verriegelungsteil miteinander verbunden sind.

2. Der Block nach Anspruch 1, welcher ferner eine rechteckige Scheibe (11) aus elastischem, komprimierbaren Material aufweist, wobei die Scheibe gleichgroß ist, wie die Endwand und einen zentralen Kanal aufweist, der derart bemessen und positioniert ist, um das zweite Verriegelungsteil aufzunehmen und einen komprimierbaren Lückenfüller zwischen zwei der Blöcke auszubilden.

3. Der Block nach Anspruch 2, wobei das elastische Material von einer Gruppe ausgewählt wird, die umfaßt:
synthetische Schäume, natürliche Schäume, Naturgummi und Elastomere.

4. Der Block nach Anspruch 2, welcher ferner mindestens eine Verankerungsspitze (31, 32) aufweist, die sich nach unten der Unterkanten der Endwände (15, 16) und Seitenwände (17, 18) in darunterliegendes, den Block tragendes, Material hineinerstreckt.

5. Der Block nach Anspruch 4, wobei diese Spitze (31, 32) ein mit Widerhaken versehenes Ende (35, 36) aufweist.

6. Der Block nach Anspruch 5, wobei diese Spitze (31, 32) sich von der unteren Fläche der Oberseite (14) erstreckt.

7. Der Block nach Anspruch 1, wobei diese Mittel zur gelenkigen Befestigung Verriegelungselemente in Form von Spitzen (23, 24) aufweisen, die entlang einer vertikalen Achse ausgerichtet sind und sich nach oben und nach unten von der oberen und unteren Fläche des Verriegelungsteils (20) erstrecken.

8. Der Block nach Anspruch 4, wobei die Oberseite (14), die Endwände (15, 16), die Seitenwände (17, 18), die Spitze (31, 32) und das Verrieglungsteil (20) als Ganzes aus Kunststoff geformt sind.

9. Der Block nach Anspruch 8, wobei das Verriegelungsteil (20) einstückig mit der äußeren Oberfläche der ersten Endwand (15) ausgebildet ist.

10. Der Block nach Anspruch 7, wobei der Hohlraum (26) Aussparungen (29, 30) aufweist, die derart geformt, dimensioniert und positioniert sind, um eine der Spitzen (23, 24) lösbar aufzunehmen.

11. Der Block nach Anspruch 1, wobei die erste Endwand (46) einen zweiten Hohlraum (44) aufweist, der symmetrisch zum ersten Hohlraum (45) ausgebildet ist; und
besagtes Verrieglungsteil (48) von dem Block (43) separierbar ist und einen zentralen Teil (49) und ein Paar von symmetrischen Vorsprüngen (50, 51) aufweist, die in entgegengesetzte axiale Richtungen, ausgehend vom zentralen Teil (49), sich erstrecken.

12. Der Block nach Anspruch 11, wobei das Verriegelungsteil (48) ferner umfaßt:
ein Paar von vertikal ausgerichteten Spitzen (52-55), die sich vertikal von jedem der besagten symmetrischen Vorsprünge (50, 51) erstrecken, und
wobei jeder der besagten ersten und zweiten Hohlräume (44, 45) Aussparungen (56-59) aufweist, die derart geformt, dimensioniert und positioniert sind, um eine von den Spitzen (52-55) lösbar aufzunehmen.

13. Der Block nach Anspruch 11, wobei jeder der symmetrischen Vorsprünge (50, 51) und jeder der Hohlräume (44, 45) einen im wesentlichen quadratischen Querschnitt und im wesentlichen die gleiche Höhe aufweist; und
jeder der besagten Vorsprünge (50, 51) eine Breite aufweist, die im wesentlichen kürzer ist als die Breite der besagten Hohlräume (44, 45), um eine begrenzte Drehbewegung von einem der Verriegelungsteile (48) in einem der besagten Hohlräume um eine der besagten vertikalen Achsen zu erlauben, wenn eine, dem besagten Vorsprung zugeordnete, Spitze (52-55) sich innerhalb einer Aussparung des besagten Hohlraumes befindet.

14. Der Block nach Anspruch 13, wobei der erste und zweite Vorsprung (50, 51) sich in entgegengesetzte axiale Richtungen erstrecken, wobei die Hohlräume (44, 45) symmetrisch zueinander ausgebildet sind und die Vorsprünge der Verriegelungsteile ebenfalls symmetrisch zueinander ausgebildet sind.

15. Der Block nach Anspruch 14, wobei das Verrieglungsteil (48) sich verjüngende Enden (50, 41) aufweist, um das Eindringen eines Endes des Verriegelungsteils in einen Hohlraum des Blockes zu erleichtern.

16. Der Block nach Anspruch 10, welcher ferner eine Endkappe (60) aufweist, welche umfaßt:
eine Abdeckung (61) mit im wesentlichen planen inneren und äußeren Oberflächen, die im wesentlichen parallel zueinander sind, wobei die äußere Oberfläche derart bemessen und dimensioniert ist, um den äußeren Abmessungen der ersten Endwand (15) zu entsprechen; und
einen Stöpsel (62), welcher derart bemessen und dimensioniert ist, um dicht in den besagten ersten Hohlraum (44) einzugreifen, wobei der Stöpsel von der besagten inneren Oberfläche des Deckels (61) hervorsteht.

## Revendications

1. Bloc (10) à utiliser avec d'autres blocs symétriques pour construire des bordures de parterres, de pelouses et d'allées de jardin, comprenant :
une partie supérieure rectangulaire (14) présentant des surfaces supérieure et inférieure sensiblement planes ;
des première et seconde parois d'extrémité (15, 16) présentant chacune une face intérieure et une face extérieure ;
deux parois latérales (17, 18) ;
les parois d'extrémité et les parois latérales s'étendant vers le bas et sur la périphérie à partir de la partie supérieure afin de définir une chambre intérieure (19), caractérisé par
un élément d'emboîtement (20) qui dépasse, à angle droit et vers l'extérieur, du centre de la face extérieure de la première paroi d'extrémité (15) ;
la seconde paroi d'extrémité présentant une première cavité centrale (26) qui s'étend à angle droit dans la chambre intérieure (19) et qui est formée et positionnée pour s'emboîter sur un second élément d'emboîtement (20) associé à un second bloc ; et
des moyens pour bloquer de manière articulée le second élément d'emboîtement dans la cavité, ces moyens de blocage étant orientés et positionnés et la cavité étant dimensionnée de manière à permettre un mouvement latéral courbe limité du second élément d'emboîtement dans la première cavité, permettant un mouvement d'un bloc (10) par rapport à un second bloc accouplé à l'aide du second élément d'emboîtement.

2. Bloc selon la revendication 1, comportant également une plaque rectangulaire (11) en matériau élastique compressible, cette plaque présentant les mêmes dimensions que la paroi d'extrémité, et définissant un conduit central dimensionné et positionné de manière à s'emboîter sur le second élément d'emboîtement et à former un élément de remplissage compressible entre deux blocs.

3. Bloc selon la revendication 2, dans lequel le matériau élastique est choisi dans un groupe comprenant les mousses synthétiques, les mousses naturelles, le caoutchouc naturel et les élastomères.

4. Bloc selon la revendication 2, comportant également au moins une dent d'ancrage (31, 32) qui s'étend vers le bas, au-delà des bords inférieurs des parois d'extrémité (15, 16) et des parois latérales (17, 18), dans un matériau situé au-dessous et supportant le bloc.

5. Bloc selon la revendication 4, dans lequel la dent (31, 32) comporte une section distale épaulée (35, 36).

6. Bloc selon la revendication 5, dans lequel la dent (31, 32) part de la surface inférieure de la partie supérieure (14).

7. Bloc selon la revendication 1, dans lequel les moyens de blocage articulés comprennent des éléments d'emboîtement en forme de saillies (23, 24) alignées sur des axes verticaux et dépassant, vers le haut et vers le bas, des surfaces supérieure et inférieure de l'élément d'emboîtement (20).

8. Bloc selon la revendication 4, dans lequel la partie supérieure (14), les parois d'extrémité (15, 16), les parois latérales (17, 18), la dent (31, 32) et les éléments d'emboîtement (20) sont moulés d'une seule pièce en matière plastique.

9. Bloc selon la revendication 8, dans lequel l'élément d'emboîtement (20) est réalisé d'une seule pièce avec la surface extérieure de la première paroi d'extrémité (15).

10. Bloc selon la revendication 7, dans lequel la cavité (26) présente des creux (29, 30) formés, dimensionnés et positionnés de manière à recevoir de manière amovible l'une des saillies (23, 24).

11. Bloc selon la revendication 1, dans lequel la première paroi d'extrémité (46) a une seconde cavité (44) symétrique par rapport à la première cavité (45) ; et
l'élément d'emboîtement (48) est apte à être séparé du bloc (43) et comprend une partie centrale (49) et deux prolongements symétriques (50, 51) qui s'étendent dans des directions axiales opposées, à partir de ladite partie centrale (49).

12. Bloc selon la revendication 11, dans lequel l'élément d'emboîtement (48) comporte également :
sur chaque prolongement symétrique (50, 51) deux saillies (52-55) alignées verticalement qui dépassent à la verticale, et
chacune des première et seconde cavités (44, 45) présentant des creux (56-59) qui sont formés, dimensionnés et positionnés de manière à recevoir de manière amovible l'une desdites saillies (52-55).

13. Bloc selon la revendication 11, dans lequel chacun des prolongements symétriques (50, 51) et chacune des cavités (44, 45) ont une section transversale sensiblement quadrangulaire, et des hauteurs sensiblement identiques ; et
chacun des prolongements (50, 51) a une largeur sensiblement inférieure à celle des cavités (44, 45) afin de permettre un mouvement de rotation limité de l'un des éléments d'emboîtement (48) dans l'une des cavités, autour de l'un desdits axes verticaux, lorsqu'une saillie (52-55) associée au prolongement est emboîtée dans un creux associé à ladite cavité.

14. Bloc selon la revendication 13, dans lequel les premier et second prolongements (50, 51) s'étendent dans des directions axiales opposées, les cavités (44, 45) sont symétriques et les prolongements de l'élément d'emboîtement sont symétriques.

15. Bloc selon la revendication 14, dans lequel l'élément d'emboîtement (48) a des extrémités coniques (50, 51) afin de faciliter l'introduction d'une de ses extrémités dans une cavité du bloc.

16. Bloc selon la revendication 10, comportant également un obturateur d'extrémité (60) qui comprend :
un couvercle (61) présentant des surfaces intérieure et extérieure sensiblement planes et sensiblement parallèles, la surface extérieure étant dimensionnée pour correspondre aux dimensions extérieures de la première paroi d'extrémité (15) ; et
un bouchon (62) dimensionné de manière à entrer de manière ajustée dans la première cavité (44), ledit bouchon dépassant de la surface intérieure du couvercle (61).
